Europäisches Patentamt

European Patent Office

Office européen des brevets

(11) Veröffentlichungsnummer: **0 171 693**
**B1**

(12) **EUROPÄISCHE PATENTSCHRIFT**

(45) Veröffentlichungstag der Patentschrift: **13.06.90**

(51) Int. Cl.⁵: **F 16 K 3/12**

(21) Anmeldenummer: **85109453.2**

(22) Anmeldetag: **27.07.85**

(54) **Absperrschieber.**

(30) Priorität: **02.08.84 DE 3428485**

(43) Veröffentlichungstag der Anmeldung:
**19.02.86 Patentblatt 86/08**

(45) Bekanntmachung des Hinweises auf die
Patenterteilung:
**13.06.90 Patentblatt 90/24**

(84) Benannte Vertragsstaaten:
**AT BE CH FR GB IT LI LU NL SE**

(56) Entgegenhaltungen:
**EP-A- 146 112**
**DD-A- 201 938**
**DE-U-7 143 045**

(73) Patentinhaber: **BOPP & REUTHER GMBH**
**Carl-Reuther-Strasse 1**
**D-6800 Mannheim 31 (DE)**

(72) Erfinder: **Walfried, David**
**Raiffeisenstrasse 10**
**D-6701 Maxdorf (DE)**

(74) Vertreter: **Fritsch, Klaus, Dipl.-Ing.**
**Richard Wagner Strasse 1a**
**D-6701 Hochdorf-Assenheim 2 (DE)**

EP 0 171 693 B1

Courier Press, Leamington Spa, England.

**Beschreibung**

Die Erfindung bezieht sich auf einen in einem Absperrschieber einsetzbaren, in Draufsicht eine langgestreckte, insbesondere ovale Außenkontur, aufweisenden, quer zur Strömungsrichtung im Schiebergehäuse angeordneten und von einer Betätigungsspindel des Absperrschiebers in Spindellängsrichtung aus der Offenstellung in die Schließstellung verschiebbaren Absperrkeil, der durch einen rohen Gußeisenkörper und eine darauf aufgebrachte gummielastische Umhüllung gebildet ist, deren Dichtabschnitte sich in der Schieberschließstellung elastisch gegen die Sitzflächen des Schiebergehäuses legen, und der im Bereich seiner Schmalseiten je zwei Führungsabschnitte aufweist, die auf entgegengesetzten Seiten des Absperrkeils in Spindellängsrichtung verlaufend am Absperrkeil vorgesehen sind und sich an Gegenführungsabschnitten im Schiebergehäuse abstützen.

Bei diesen bekannten weichdichtenden Schiebern hat man bisher nicht nur die an den Gehäusesitzflächen anliegenden, relativ dickwandigen elastischen Dichtstränge im Bereich de Abdichtflächen auf den gußeisernen Absperrkeil aufgummiert sondern es wurde auch die übrige Oberfläche des Absperrkeils allseitig mit einer gummielastischen Umhüllung versehen, damit die Dichtflächenabschnitte fester im Absperrkeil gehalten sind und der Absperrkeil auf seiner gesamten Oberfläche korrosionsgeschützt ist. Die an den beiden Schmalseiten des Absperrkeils gegenüberliegenden, in Spindellängsrichtung verlaufenden Führungsabschnitte, die an den Führungsflächen des Schiebergehäuses geführt sind, sind hierbei ebenfalls durch die elastische Umhüllung des Absperrkeils gebildet worden. Die gummielastische Auskleidung dieser Führungsabschnitte am Absperrkeil besitzt jedoch sehr schlechte Gleiteigenschaften und unterliegt einem sehr hohen Abrieb, so daß einerseits infolge der hohen Reibung hohe Spindelkräfte für die Betätigung des Absperrschiebers erforderlich sind und andererseits die Führungsabschnitte am Abspernkeil sehr schnell verschleißen. Durch den hohen Abrieb und den Verschleiß an den Führungsabschnitten muß auch mit einem Verkanten des Absperrkeils gerechnet werden, wodurch Riefen an den Führungsabschnitten entstehen und die Längsführung des Absperrkeils nicht mehr gewährleistet ist.

Aus der DD-A-201 938 ist ein Absperrkeil der eingangs genannten Art bekannt geworden (siehe dort Figur 11), dessen Führungsabschnitte von die gummielastische Umhüllung durchgreifenden Vorsprüngen des rohen Gußkörpers selbstgebildet sind. Hier besteht das Problem, daß zwischen den Führungsabschnitten und den Gegenführungsabauftritt, die erhöhten Verschleiß und gg. auch Verschmutzung des den Absperrschieber durchströmenden Fluids bewirken. Wenn der Rohkörper aus Gußeisen besteht, also ein Gußeisenkörper ist, und das den Absperrschieber durchfließende Fluid Trinkwasser ist, besteht die Gefahr des Rostens mit entsprechender Verschmutzung des Trinkwassers.

Aufgabe der Erfindung ist es, den Absperrkeil so auszubilden, daß er auf seiner gesamten Oberfläche, d. h. auch im Bereich der Führungsabschnitte, sicher korrosionsgeschützt ist und trotzdem eine gute Gleitführung an den Führungsabschnitten besitzt, die nur geringe Drehmomente für die Spindelbetätigung erfordert und besonders abriebfest ist.

Diese Aufgabe wird erfindungsgemäß dadurch gelöst, daß im Bereich der Führungsabschnitte des Absperrkeils vorgefertigte Gleitplatten aus einem Kunststoff mit guten Gleiteigenschaften, hoher Verschleißfestigkeit und ausreichender Temperaturbeständigkeit, vorzugsweise aus Polyamid, vor dem Spritzen der gummielastischen Umhüllung auf den Absperrkeil aufgesetzt sind, wobei sie beim Spritzvorgang durch Hinterspritzen mit der Spritzmasse der gummielastischen Umhüllung fest am Absperrkeil verankert werden.

Aus der älteren, nachveröffentlichten EP-A 0 146 112 ist ein Absperrkeil bekanntgeworden, dessen Führungsabschnitte an den Schmalseiten angeordnet sind und durch U-förmige Gleitschuhe gebildet und in entsprechend ausgebildete, U-förmige Nuten in den Schmalseiten des Absperrkeils eingesetzt sind. Die Gleitschuhe sind kleiner als die zugehörigen Nuten, so daß zwischen den Gleitschuhen und den Nuten ein Freiraum vorgesehen ist, der durch die gummielastische Umhüllung ausgefüllt ist, wodurch die Gleitschuhe an dem Absperrkeil befestigt werden. Die Herstellung des aus der EP-A 0 146 112 bekannten Absperrkeils und insbesondere die Fixierung der Gleitschuhe am Absperrkeil erfolgt dadurch, daß die Gleitschuhe an jeweils einer Leiste im Spritzwerkzeug, mit dem die Umhüllung auf den Gußeisenkörper aufgebracht wird festgerastet werden, so daß die Gleitschuhe praktisch ein Teil der Spritzform bilden.

Im Gegensatz dazu werden bei der Erfindung die vorgefertigten Gleitplatten vor dem Spritzvorgang auf den Absperrkeil aufgesetzt und erst danach hinterspritzt.

Dadurch, daß im Bereich der Führungsabschnitte des Absperrkeils vorgefertigte Gleitplatten auf den Absperrkeil aufgesetzt sind, die aus einem Kunststoff mit guten Gleiteigenschaften, hoher Verschleißfestigkeit und ausreichender Temperaturbeständigkeit, vorzugsweise aus Polyamid bestehen, ist der Absperrkeil im Bereich der Führungsabschnitte mit einer ausgezeichneten Gleitführung versehen, die sich durch einen besonders niedrigen Reibungswiderstand und durch geringsten Verschleiß auszeichnet. Besonders bei der Verwendung von Gleitplatten aus Polyamid 6,6 oder einem noch hochwertigeren Kunststoff ergibt sich in der Paarung mit denFürungsabschnitten des gegossenen und gegen Korrosion oberflächenbehandelten Schiebergehäuses der geringstmögliche Gleitverschleiß und auch der Gleitreibungskoeffizient ist hier sehr niedrig. Da die Gleitplatten durch Hinterspritzen

2

mit der Spritzmasse der gummielastischen Umhüllung am Absperrkeil verankert sind, sind diese in besonders einfacher Weise fest mit dem Absperrkeil verbunden und erhalten gleichzeitig eine elastische Einbettung, so daß leichte Verkantungen des Absperrkeils von der Gleitführung aufgenommen werden.

Der für die Gleitplatten vorgeschlagene Kunststoff besitzt auch eine gute Beständigkeit gegen höhere Temperaturen, so daß die Gleitplatten ohne weiteres die beim Spritzen der gummielastischen Umhüllung kurzzeitig auftretenden Temperaturen von beispielsweise 170 - 180 ° C gut vertragen können. Da das Hinterspritzen der Kunststoffgleitplatten und das Spritzen der Umhüllung zur selben Zeit in einem Arbeitsgang mit derselben Spritzmasse erfolgt, ist kein besonderer Arbeitsgang und kein zusätzliches Haltemittel für die Befestigung der Gleitplatten am Absperrkeil erforderlich und nach Abschluß des auch für die Umhüllung notwendigen Vulkanisierungsprozesses sind die Gleitplatten über die Gummizwischenschicht innig mit dem Absperrkeil verbunden.

Der synthetische Kautschuk für die Gummiumhüllung des Absperrkeils wird üblicherweise mit 200 bar und mehr in die Form eingespritzt, so daß dadurch gewährleistet ist, daß die Gleitplatten an allen Stellen porenfrei von der Spritzmasse hinterfüllt werden, so daß sich eine geschlossene gummielastische Schicht zwischen den Gleitplatten und dem Absperrkeil ergibt, die eine dauerhafte Verbindung gewährleistet.

Zweckmäßigerweise sind die Gleitplatten entsprechend dem Merkmal des Patentanspruchs 2 nicht nur hinterspritzt sondern bis zu deren freibleibenden Gleitflächen auch von der Spritzmasse der gummielastischen Umhüllung umspritzt, wodurch sich ein nahtloser dichter und damit korrosionssicherer Übergang von den Kunststoffgleitplatten zu der gummielastischen Umhüllung des Absperrkeils ergibt und der Absperrkeil trotz der guten Gleitführung einen sicheren Korrosionsschutz auch im Bereich der Gleitplatten erhält.

In Weiterentwicklung der Erfindung wird gemäß dem Patentanspruch 3 vorgeschlagen, jeweils die beiden an einer Schmalseite gegenüberliegenden Gleitplatten durch eine Verbindungsbrücke zu einem einteiligen U-förmigen Gleitplattenpaar zusammenzufassen, so daß sich eine stabile, auf die beiden Schmalseiten des Absperrkeils aufsetzbare Aufsteckeinheit ergibt, deren Gleitplatten durch die Brückenverbindung eine fixierte Ausgangslage erhalten.

Da die Verbindungsbrücke der Gleitplattenpaare entsprechend dem Merkmal des Anspruchs 4 ebenfalls mit der Spritzmasse der gummielastischen Umhüllung hinterspritzt ist, erhalten die Gleitplatten eine zusätzliche Verankerung am Absperrkeil, da die Aufsteckeinheit über ihre gesamte Innenfläche innig mit der gummielastischen Umhüllung verbunden ist.

Zweckmäßigerweise kann die Verbindungsbrücke der Gleitplattenpaare entsprechend dem Merkmal des Patentanspruchs 5 mit Verankerungsdurchbrechungen versehen und durch eine innere und äußere Umspritzung fest in der gummielastischen Umhüllung eingebettet sein, wodurch die Verbindungsbrücke besonders fest im gummielastischen Werkstoff verankert ist.

Nach dem Merkmal des Anspruchs 6 sind die Gleitplatten auf ihrer am Absperrkeil anliegenden Innenseite mit Verankerungsvorsprüngen für die hinterspritze gummielastische Umhüllung versehen, so daß sich eine feste Verzahnung zwischen den Gleitplatten und der hinterspritzen gummielastischen Umhüllung ergibt, die gewährleistet, daß die beim Betätigen der Schieberspindel auf die Gleitführung des Absperrkeils übertragenen Schubkräfte sicher aufgenommen werden.

Vorzugsweise tragen die Gleitplatten entsprechend dem Merkmal des Anspruchs 7 zum Absperrkeil hin abgewinkelte Halteleisten mit Verankerungsdurchbrechungen oder Verankerungsausschnitten, die durch eine innere und zumindest teilweise äußere Umspritzung fest in der gummielastischen Umhüllung eingebettet sind, so daß hierdurch eine weitere zusätzliche Verankerung der Gleitplatten am Absperrkeil erzielt wird.

Die Erfindung wird anhand von Ausführungsbeispielen in der Zeichnung näher erläutert, und zwar zeigt

Fig. 1 einen Gleitplatten tragenden Absperrkeil mit gummielastischer Umhüllung in Vorderansicht,

Fig. 2 in der oberen Zeichnungshälfte den gleichen Absperrkeil in Draufsicht und in der unteren Zeichungshälfte im Schnitt nach Linie II - II der Fig. 1 mit zwei verschieden ausgebildeten Gleitplatten,

Fig. 3 einen anderen Absperrkeil mit an den Schmalseiten nach außen vorspringenden, Gleitplatten tragenden Führungsleisten, größtenteils im Längsschnitt,

Fig. 4 den Absperrkeil nach Fig. 3 in Draufsicht und

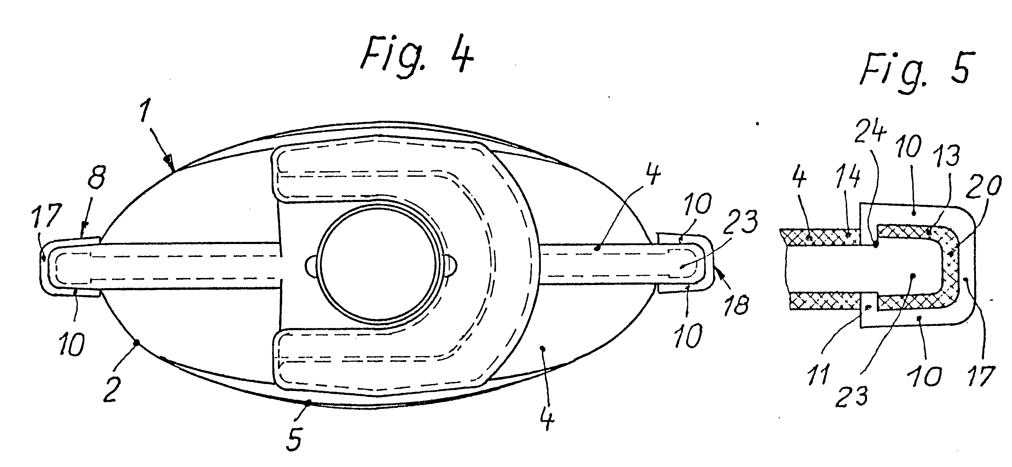

Fig .5 eine Führungsleiste des Absperrkeils nach Fig. 4 mit aufgebrachten Gleitplatten in vergrößertem Maßstab.

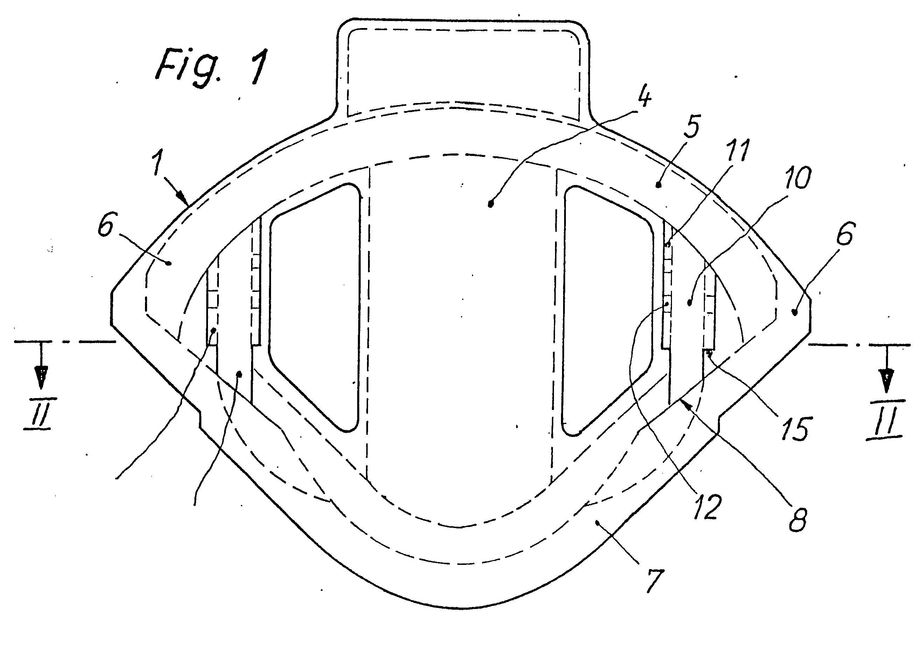

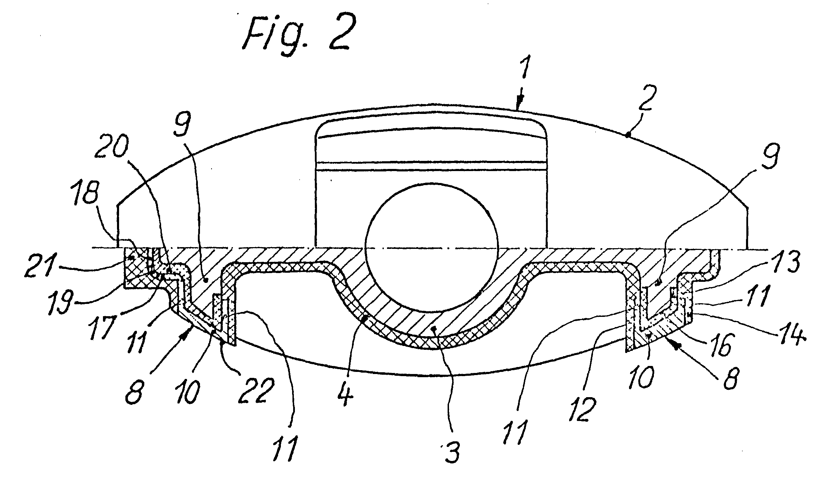

Der in den Fig 1 und 2 dargestellte gummierte Absperkeil 1 besitzt in Draufsicht eine ovale Außenkontur 2 und ist quer zur Strömung in das nicht gezeigte Schiebergehäuse eingesetzt. Er wird im wesentlichen aus dem rohen Gußeisenkörper 3 und der aufgespritzten gummielastischen Umhüllung 4 gebildet. Im Bereich der mit den Sitzflächen des Schiebergehäuses zusammenwirkenden Abdichtflächen ist die gummielastische Umhüllung 4 des Gußeisenkörpers 3 wulstartig verdickt und trägt beiderseits einen oberen elastischen Dichtstrang 5, der an den Schmalseiten 6 des Absperrkeils 1 nach unter hin in den unteren Dichtstrang 7 übergeht. Der rohe Gußeisenkörper 3 ist in einiger Entfernung von den beiden Schmalseiten 6 zur Bildung der am Gehäuse anliegenden Längsführungsabschnitte 8 mit gegossenen Vorsprüngen 9 versehen, die durch die Kunststoffgleitplatten 10 abgedeckt sind. Die auf beiden Seiten des Absperrkeils 1 vorgesehenen, durch die Gleitplatten 10 abgedeckten Gleitführungen 8 reichen nach oben hin nur bis zu den oberen Dichtsträgen 5, da diese Dichtstränge entsprechend der Außenkontur 2 des Absperrkeils 1 die Gleitführungen 8 nach außen übergreifen.

Die in der rechten Hälfte der Fig. 2 gezeigte Gleitplatte 10 ist mit zum Absperrkeil hin abgewinkelten Halteleisten 11 versehen. Diese Halteleiten 11 tragen Verankerungsdurchbrechungen 12. Die Gleitplatte 10 ist zusammen mit den beiden Halteleisten 11 durch eine innere Hinterspritzung 13 und außerdem durch eine äußere Umspritzung 14 der Halteleisten 11 fest in der gummielastischen Umhüllung 4 eingebettet. Auch ist die Gleitplatte 10 noch mit seitlich vorspringenden Verankerungsabsätzen 15 versehen, wie die Fig. 1 erkennen läßt. Weiterhin trägt die Gleitplatte 10 auf ihrer am Absperrkeil anliegenden Innenseite Verankerungsvorsprünge 16, mit denen sie verzahnungsartig in die hinterspritzte Innenschicht 13 eingreift.

Bei dem in der linken Hälfte der Fig. 2 gezeigten Ausführungsbeispiel sind jeweils die beiden an der linken Schmalseite 6 des Absperrkeils gegenüberliegenden Gleitplatten 10, die ebenfalls Halteleisten 11 tragen, durch eine Verbindungsbrücke 17 zu einem einteiligen U-förmigen Gleitplattenpaar 18 zusammengefaßt. Die Verbindungsbrücke 17 ist ebenfalls mit Verankerungsdurchbrechungen 19 versehen und ist durch eine innere Hinterspritzung 20 und eine äußere Umspritzung 21 fest in der gummielastischen Umhüllung 4 eingebettet. Das Gleitplattenpaar 18 ist somit auch hier so weit von der gummielastischen. Umhüllung hinter- u. überspritzt, daß nur noch die am Schiebergehäuse geführte Gleitfläche 22 nach außen frei bleibt.

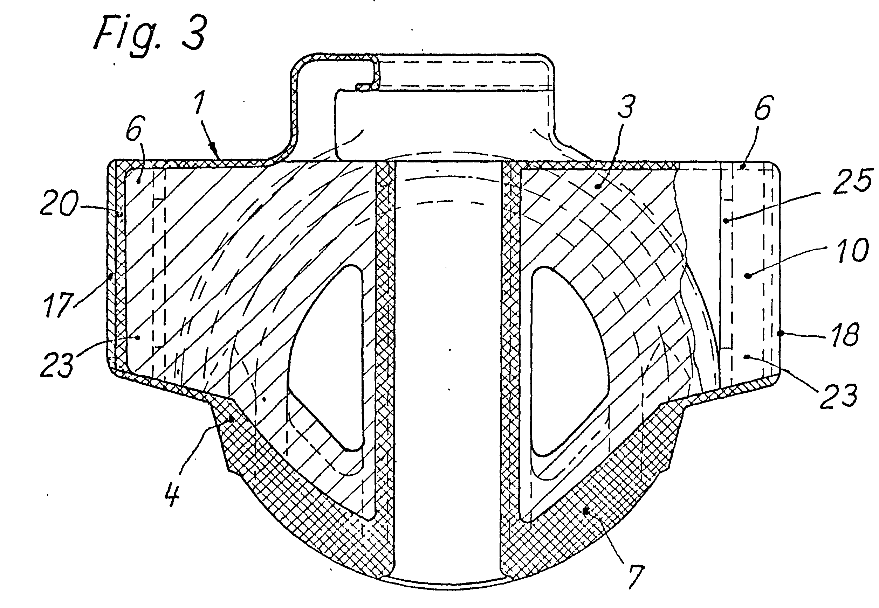

Bei dem Absperrkeil nach den Fig. 3 bis 5 liegen die Längsführungsabschnitte 8 nicht innerhalb der Dichtsträge 5, 7 sondern sind an den Schmalseiten 6 des Absperrkeils als nach außen vorgezogene Führungsleisten 23 ausgebildet. Diese beiden nach außen vorspringenden Führungsleisten 23 ermöglichen eine Führung des Absperrkeils im Gehäuse über den gesamten Öffnungs- und Schließhub, während die innenliegenden Führungsabschnitte 8 nach den Fig. 1 und 2 nur eine Führung des Absperrkeils im unteren Hubbereich für die Fixierung der Schließstellung gewährleisten. Die in den Fig. 1 und 2 verwendeten Bezugszeichen 1 bis 20 sind bei dem Absperrkeil nach den Fig. 3 bis 5 für die gleichen Teile verwendet worden. Die Gleitplatten 10 sind hier durch eine Verbindungsbrücke 17 zu einer Aufsteckeinheit 18 zusammengefaßt, und die nach innen abgebogenen Halteleisten 11 der Gleitplatten 10 hintergreifen einen Rücksprung 24 der Führungsleiste 23, so daß das aufgesteckte Gleitplattenpaar 18 auch durch diesen Rücksprung 24 zugfest am Absperrkeil gehalten ist. Auch hier sind die beiden Gleitplatten 10 durch die Hinterspritzschicht 13 am Absperrkeil 1 verankert und im Bereich der Verbindungsbrücke 17 ist zur roh gegossenen Führungsleiste 23 hin die innere Hinterspritzung 20 vorgesehen, die eine zusätzliche Verankerung ermöglicht. Auch die beiden Halteleisten 11 werden innen von der Hinterspritzung 13 und außen von der Außenumspritzungsicht 14 verschlossen und an der Führungsleiste 23 festgehalten. Schließlich sind die zum Absperrkeil hin abgewinkelten Halteleisten 11 noch mit einem Verankerungsausschnitt 25 versehen, über den die innere Hinterspritzschicht 13 und die äußere Umspritzschicht 14 ineinanderfließen können und dadurch den Gleitplatten 10 eine zusätzliche Verzahnung in Schubrichtung des Absperrkeils geben.

**Patentansprüche**

1. In einen Absperrschieber einsetzbarer, in Draufsicht eine langgestreckte, insbesondere ovale Außenkontur aufweisender, quer zur Strömungsrichtung im Schiebergehäuse angeordneter und von einer Betätigungsspindel des Absperrschiebers in Spindellängsrichtung aus der Offenstellung in die Schließstellung verschiebbarer Absperrkeil (1), der durch einen rohen Gußeisenkörper (3) und eine darauf aufgebrachte gummielastische Umhüllung (4) gebildet ist, deren Dichtabschnitte (5, 7) sich in der Schieberschließstellung elastisch gegen die Sitzflächen des Schiebergehäuses legen, und der im Bereich seiner Schmalseiten je zwei Führungsabschnitte (8) aufweist die auf entgegengesetzten Seiten des Absperrkeils (1) in Spindellängsrichtung verlaufend am Absperrkeil vorgesehen sind und sich an Gegenführungsabschnitten im Schiebergehäuse abstützen, dadurch gekennzeichnet, daß im Bereich der Führungsabschnitte (8) des Absperrkeils (1) vorgefertigte Gleitplatten (10) aus einem Kunststoff mit guten Gleiteigenschaften, hoher Verschleißfestigkeit und ausreichender Temperaturbeständigkeit, vorzugsweise aus Polyamid, vor dem Spritzen der gummielastischen Umhüllung (4) auf den Absperrkeil (1) aufgesetzt sind, wobei sie beim Spritzvorgang durch Hinterspritzen mit der Spritzmasse der gummielastischen Umhüllung (4) fest am Absperrkeil (1) verankert werden.

2. Absperrkeil nach Anspruch 1, dadurch gekennzeichnet, daß die Gleitplatten (10) nicht nur hinterspritzt, sondern bis zu deren freibleibenden Gleitflächen (22) auch von der Spritzmasse der gummielastischen Umhüllung (4) umspritzt sind.

3. Absperrkeil nach Anspruch 1 oder 2, dadurch gekennzeichnet, daß jeweils die beiden an einer Schmalseite (6) des Absperrkeils (1) gegenüberliegenden Gleitplatten (10) durch eine Verbindungsbrücke (17) zu einem einteiligen U-förmigen Gleitplattenpaar (18) zusammengefaßt sind.

4. Absperrkeil nach Anspruch 3, dadurch gekennzeichnet, daß die Verbindungsbrücke (17) der Gleitplattenpaare (18) ebenfalls mit der Spritzmasse der gummielastischen Umhüllung (4) hinterspritzt ist.

5. Absperrkeil nach Anspruch 4, dadurch gekennzeichnet, daß die Verbindungsbrücke (17) der Gleitplattenpaare (18) mit Verankerungsdurchbrechungen (19) versehen und durch eine innere und äußere Umspritzung (20, 21) fest in der gummielastischen Umhüllung (4) eingebettet ist.

6. Absperrkeil nach einem der Ansprüche 1 bis 5, dadurch gekennzeichnet, daß die Gleitplatten (10) auf ihrer am Absperrkeil (1) anliegenden Innenseite mit Verankerungsvor- oder rücksprüngen (16) für die hinterspritzte und/oder mit seitlichen Verankerungsabsätzen (15) für die umspritzte gummielastische Umhüllung (4) versehen sind.

7. Absperrkeil nach einem der Ansprüche 1 bis 6, dadurch gekennzeichnet, daß die Gleitplatten (10) zum Absperrkeil (1) hin abgewinkelte Halteleisten (11) mit Verankerungsdurchbrechungen (12) oder Verankerungsausschnitten (25) tragen, die durch eine innere und zumindest teilweise äußere Umspritzurg (13, 14) fest in der gummielastischen Umhüllung (4) eingebettet sind.

## Revendications

1. Plateau d'arrêt en coin (1) à monter dans une vanne d'arrêt, présentant dans une vue en plan un contour extérieur allongé, en particulier ovale, disposé dans le corps de vanne transversalement par rapport à la direction d'écoulement et déplaçable au moyen d'une tige de commande de la vanne d'arrêt dans la direction longitudinale de la tige depuis la position d'ouverture à la position de fermeture, lequel est constitué d'un corps brut en fonte (3) et d'un enrobage élastique (4) en caoutchouc appliqué sur celui-ci, dont les zones d'étanchéite (5, 7) portent élastiquement, en position de fermeture, sur les surfaces de siège du corps de vanne, et qui présente, dans la région de chacun de ses côtés étroits, deux tronçons de guidage (8) qui sont prévus dans le plateau d'arrêt sur des côtés opposés du plateau d'arrêt (1) parallellement à la direction longitudinale de la tige et qui s'appuyent sur des portées de guidage correspondantes dans le corps de vanne, caractérisé en ce que, dans la région des tronçons de guidage (8) du plateau d'arrêt (1), des plaques de glissement (10) préfabriquées en une matière plastique avec de bonnes propriétés de glissement, une résistance élevée à l'usure et une excellente résistance à la température, de préférence en polyamide, sont posées avant la projection de l'enrobage élastique (4) en caoutchouc sur le plateau d'arret (1), ces plaques étant ancrées fermement au plateau d'arrêt (1) lors de l'opération de projection par recouvrement à l'arrière avec la masse de projection de l'enrobage élastique (4) en caoutchouc.

2. Plateau d'arrêt en coin suivant la revendication 1, caractérisé en ce que les plaques de glissement (10) ne sont pas seulement recouvertes à l'arrière mais sont entourées par la masse de projection de l'enrobage élastique (4) en caoutchouc jusqu'à leurs surfaces de glissement (22) qui restent libres.

3. Plateau d'arrêt en coin suivant la revendication 1 ou 2, caractérisé en ce que chacune des deux plaques de glissement (10) posées en opposition sur un côté étroit (6) du plateau d'arrêt (1) sont réunies par un pont de liaison (17) en une paire unitaire (18), en forme de U, de plaques de glissement.

4. Plateau d'arrêt en coin suivant la revendication 4, caractérisé en ce que le pont de liaison (17) des paires de plaques de glissement (18) est également recouvert par projection à l'arrière avec la masse de projection de l'enrobage élastique (4) en caoutchouc.

5. Plateau d'arrêt en coin suivant la revendication 4, caractérisé en ce que le pent de liaison (17) des paires de plaques de glissement (18) est pourvu de trous d'ancrage (19) et est fermement noyé dans l'enrobage élastique (4) en caoutchouc par une projection intérieure et extérieure (20, 21).

6. Plateau d'arrêt en coin suivant und des revendications 1 à 5, caractérisé en ce que les plaques de glissement (10) sont pourvues, sur leur face intérieure appliquée sur le plateau d'arrêt (1), de saillies ou de creux d'ancrage (16) et/ou de saignées d'ancrage latérales (15) pour l'enrobage élastique (4) en caoutchouc.

7. Plateau d'arrêt en coin suivant une des revendications 1 à 6, caractérisé en ce que les plaques de glissement (10) portent des barrettes de maintien (11) coudées en direction du plateau d'arrêt (1), avec des trous d'ancrage (12) ou des découpes d'ancrage (25) qui sont fermement noyées dans l'enrobage élastique (4) en caoutchouc par une projection intérieure et au moins partiellement extérieure (13, 14).

## Claims

1. Shut-off wedge (1), which can be inserted into a shut-off slide valve, has in plan view an elongated, in particular oval external contour, is arranged transverse to the direction of flow in the slide valve casing, can be displaced by an actuating spindle of the shut-off slide valve ·in the longitudinal direction of the spindle from the open position into the closed position, and is formed by a rough cast-iron body (3) and a rubber-elastic covering (4) applied thereto, the sealing portions (5, 7) of which, in the closed position of the slide valve, lie elastically against the seating surfaces of the slide valve casing, and which, in the region of its narrow sides, has in each case two guide portions (8) which are provided on the shut-off wedge on opposite sides of the shut-off wedge (1) running in the longitudinal direction of the spindle and are supported against reversed guide portions in the slide valve casing, characterized in that sliding plates (10) prefabricated from a plastic with good sliding properties, high wear resistance and sufficient heat resistance, preferably from polyamide, are seated in the region of the guide portions (8) of the shut-offwedge (1) before the rubber-elastic covering (4) is injection-moulded onto the shut-off wedge (1), the sliding plates being anchored securely to the shut-off wedge (1) during the injection moulding process by rear injection moulding with the injection-moulding compound of the rubber-elastic covering (4).

2. Shut-off wedge according to Claim 1, characterized in that the sliding plates (10) are not only rear injection-moulded but are also encapsulated by injection-moulding up to their sliding surfaces (22), which remain open, with the injection-moulding compound of the rubber-elastic covering (4).

3. Shut-off wedge according to Claim 1 or 2, characterized in that the two sliding plates (10) lying opposite a narrow side (6) of the shut-off wedge (1) are each combined with a connecting bridge (17) to form a one-piece U-shaped pair of sliding plates (18).

4. Shut-off wedge according to Claim 3, characterized in that the connecting bridge (17) of the pair of sliding plates (18) is likewise rear injection-moulded with the injection-moulding compound of the rubber-elastic covering (4).

5. Shut-off wedge according to Claim 4, characterized in that the connecting bridge (17) of the pair of sliding plates (18) is provided with anchoring openings (19) and is embedded securely in the rubber-elastic covering (4) by an inner and outer injection-moulded encapsulating layer (20, 21).

6. Shut-off wedge according to one of Claims 1 to 5, characterized in that the sliding plates (10) are provided on their inner side adjacent to the shut-off wedge (1) with anchoring projections or recesses (16) for the rear injection-moulded rubber-elastic covering (4) and/or with lateral anchoring shoulders (15) for the rubber-elastic covering (4) encapsulated by injection moulding.

7. Shut-off wedge according to one of Claims 1 to 6, characterized in that the sliding plates (10) carry retaining strips (11) turned towards the shut-off wedge (1) and with anchoring openings (12) or anchoring cutouts (25) and which are embedded securely in the rubber-elastic covering (4) by an inner and at least partially outer injection-moulded encapsulating layer (13, 14).

Fig. 1

1  4  5  11  10  6

6

II

II

12  8  15  7

EP 0 171 693 B1

Fig. 2

Fig. 3

EP 0 171 693 B1

Fig. 5

Fig. 4